# EUROPEAN PATENT APPLICATION

(11) **EP 4 815 623 A1**
(43) Date of publication of application: **30.09.2026**
(21) Application number: 24893241.0
(22) Date of filing: 06.11.2024
(51) Int. Cl.: H05B 3/02, H05B 3/34, H05B 3/06, H05B 1/02, H01M 10/615, H01M 10/6571

(54) **HEATING FILM AND BATTERY PACK**

(30) Priority: 24.11.2023 CN 202323185254 U
(71) Applicant: Zhuhai Cosmx Power Co., Ltd., Zhuhai, Guangdong 519180 (CN)
(72) Inventor: YAO, Jibing, Zhuhai, Guangdong 519180 (CN); WANG, Yanqing, Zhuhai, Guangdong 519180 (CN)
(74) Representative: Murgitroyd & Company
(86) International application number: PCT/CN2024/130239
(87) International publication number: WO 2025/108083

(57) **Abstract**

The present application discloses a heating film and a battery pack. The heating film is configured to heat a plurality of cells arranged in sequence. The heating film includes a plurality of heating zones arranged at intervals and a fold connection zone located between two adjacent heating zones of the plurality of heating zones, where an edge of the fold connection zone adjacent to each of the two adjacent heating zones is a fold line, and the heating film is foldable along the fold line; and a through hole is formed in the heating film, and the fold line is located at an edge of the through hole or extends through the through hole. In the technical solutions of the present application, a stress of the heating film at the fold line can be reduced, thereby facilitating folding and assembly and achieving a continuous bending operation of the heating film; and arching of the heating zone under the action of the stress can be avoided, thereby ensuring the fitting effect between the heating zones and surfaces of the cells.

## Description

### TECHNICAL FIELD

The present application relates to the technical field of batteries, and in particular to a heating film, and also relates to a battery pack including the heating film.

### BACKGROUND

With the development of society, electronic terminal products, such as unmanned aerial vehicles, vacuum cleaners, power tools, and medical devices, are required to be operated in cold environments. However, during storage and use of lithium-ion batteries, temperature exerts significant impacts on the performance and lifespan of the batteries. In a low-temperature environment, the impacts include the following aspects. 1. Poor battery discharge capability: the diffusion rate of lithium ions in a graphite anode is slower; lithium precipitation is liable to occur; as the temperature decreases, the electrode reaction rate also decreases; and assuming that the battery voltage remains constant, a decrease in discharge current will reduce the battery power output. 2. Insufficient charging at low temperature: at a low temperature, the viscosity of electrolyte decreases, and a decrease in conductivity also reduces the activity of active materials, which may increase the concentration difference of electrolyte to enhance polarization, so as to cause premature termination of charging, and also lead to a decrease in battery capacity. 3. Safety hazards: affected by the low temperature, the lithium intercalation rate of graphite decreases, making metallic lithium likely to precipitate on the surface of the negative electrode, and if the rest time after charging is insufficient before use, the metallic lithium cannot be fully reintercalated into graphite, so that some metallic lithium persistently remains on the surface of a negative electrode, which is highly likely to form lithium dendrites, and the dendrites may pierce a separator when growing to a sufficient size, which may establish a direct connection between the positive and negative electrodes to cause an internal short circuit.

Therefore, it is necessary to provide thermal insulation measures for the battery. In a commonly used heating method currently available on the market, a heating film is provided inside, and the heating film generates heat that is supplied to a battery cell module in a battery for thermal insulation. However, due to an irregular structure of the battery, stress is generated at bent corners of the heating film, and the generated stress may cause the heating film to arch, which prevents the heating film from fitting well with each cell and thus from efficiently transferring heat to the cells.

### SUMMARY

In view of this, the present application provides a heating film, and further provides a battery pack including the heating film, which solve the problem that stress is generated at bent corners of a heating film and causes arching of the heating film.

To achieve the above objective, the present application provides the following technical solutions.

A heating film configured to heat a plurality of cells arranged in sequence is provided. The heating film includes a plurality of heating zones arranged at intervals and a fold connection zone located between two adjacent heating zones of the plurality of heating zones;
where an edge of the fold connection zone adjacent to each of the two adjacent heating zones is a fold line, and the heating film is foldable along the fold line; and
a through holes is formed in the heating film, and the fold line is located at an edge of the through hole or extends through the through hole.

Optionally, in the heating film, a plurality of through holes are provided along an extension direction of the fold line;
and/or
along the extension direction of the fold line, a ratio of a total length of the through hole to a length of the fold line ranges from 0.5 to 0.8.

Optionally, in the heating film, corners of the through hole are chamfered.

Optionally, the heating film includes:
two protective layers arranged in a stack;
a heating core disposed between the two protective layers, an electrical connection end of the heating core being located in the fold connection zone; and
an electrical connector electrically connected to the electrical connection end.

Optionally, in the heating film, a temperature switch is connected to the electrical connector; and
when a temperature is higher than a first set value, the temperature switch is turned off, and the heating film stops heating; and when the temperature is lower than a second set value, the temperature switch is turned on, and the heating film heats.

Optionally, in the heating film, the heating core is a heating resistance wire; and/or
the electrical connector is a connecting wire; and/or
an insulation protective layer is provided at a connection between the electrical connector and the electrical connection end.

Optionally, in the heating film, a positioning hole is formed in the heating film, so that when the heating film is assembled with the plurality of cells, the positioning hole is positioned with a positioning point of an assembly fixture.

Optionally, in the heating film, adhesive members are provided on both a front side and a back side of the heating zone.

Optionally, in the heating film, the heating zone includes a first end and a second end that are positioned opposite each other along a length direction of each of the plurality of cells; and
the adhesive members are respectively provided near the first end and near the second end of the heating zone, with a spacing therebetween.

Optionally, in the heating film, a length dimension of the heating zone is less than or equal to a length dimension of each of the plurality of cells, and a width dimension of the heating zone is less than or equal to a width dimension of the cell;
and/or
a length dimension of the fold connection zone is less than or equal to a length dimension of each of the plurality of cells, the fold connection zone and the two adjacent heating zones enclose a folding space in a folded heating film, and a width dimension of the fold connection zone is greater than or equal to a sum of thickness dimensions of all cells that are accommodated within the folding space;
   and/or
a thickness dimension of the heating film ranges from 0.13 mm to 0.5 mm.

Optionally, in the heating film, a heating power of heating zones at both ends of the heating film is greater than a heating power of a heating zone in a middle region of the heating film.

Optionally, in the heating film, the through hole is formed in the fold connection zone, and a width of the through hole is equal to a width of the fold connection zone along a direction in which the plurality of heating zones are arranged at intervals; or a region in which the through hole is formed extends beyond the fold connection zone, and two edges of the through hole are respectively located in the two adjacent heating zones.

A battery pack is provided. The battery pack includes a battery cell module and a heating film described above;
where the battery cell module includes a plurality of cells arranged in sequence;
the heating film forms a plurality of folding spaces arranged in sequence along an arrangement direction of the plurality of cells; and the plurality of cells are disposed in the plurality of folding spaces.

Optionally, the battery pack further includes a tab welding plate located above the battery cell module, a guide hole being formed in the tab welding plate;
where the heating film includes an electrical connector passing through the guide hole.

Optionally, the battery pack further includes a control circuit board;
where an electrical connector in the heating film is electrically connected to the control circuit board.

In the heating film and battery pack according to the present application, through holes are formed in the fold connection zones. When the heating film is sequentially folded along the fold lines of the fold connection zones adjacent to the heating zones, since a through hole is formed between two fold lines of each fold connection zone, the material consumption of the heating film at the fold lines can be effectively reduced, and the size of the material folded along the fold lines is reduced, such that a stress of the heating film at a fold line (i.e., a bent corner of the heating film) is effectively reduced, thereby facilitating folding and assembly and achieving a continuous bending operation of the heating film; and arching of the heating zone under the action of the stress can be avoided, thereby ensuring the fitting effect between the heating zones and surfaces of the cells and effectively transferring heat to the cells. Moreover, the formed through holes reduce the weight of the heating film itself, thereby ensuring the energy density of the manufactured battery pack.

### BRIEF DESCRIPTION OF THE DRAWINGS

To describe technical solutions in embodiments of the present application or in the related art more clearly, the following briefly describes the drawings needed for describing the embodiments or the related art. It is clear that the drawings in the following descriptions are merely part of embodiments of the present application, and a person of ordinary skill in the art may still derive other drawings from the provided drawings without creative efforts.
FIG. 1 is a schematic structural diagram of a heating film according to the present application.
FIG. 2 shows a folded heating film according to the present application.
FIG. 3 is a schematic structural diagram of a heating core inside the heating film according to the present application.
FIG. 4 is a schematic structural diagram of the heating film according to the present application, with adhesive members provided on a front side thereof.
FIG. 5 is a schematic structural diagram of the heating film according to the present application, with adhesive members provided on a back side thereof.
FIG. 6 is a first schematic diagram of steps for the assembly of the heating film with cells according to the present application.
FIG. 7 is a second schematic diagram of steps for the assembly of the heating film with the cells according to the present application.
FIG. 8 is a third schematic diagram of steps for the assembly of the heating film with the cells according to the present application.
FIG. 9 is a fourth schematic diagram of steps for the assembly of the heating film with the cells according to the present application.
FIG. 10 is a side view of a semi-finished battery core unit according to the present application.
FIG. 11 is a front view of the semi-finished battery core unit according to the present application.
FIG. 12 is a cross-sectional view taken along line V-V in FIG. 11 according to the present application.
FIG. 13 is a schematic diagram for the assembly of the semi-finished battery core unit with a tab welding plate and tab isolation foam according to the present application.
FIG. 14 is a schematic diagram for the assembly of the assembled structure in FIG. 13 with a control circuit board, wires, and a connector terminal according to the present application.
FIG. 15 is a schematic diagram for the assembly of the assembled structure in FIG. 14 with auxiliary foam according to the present application.
FIG. 16 is a schematic structural diagram of a battery cell core unit according to the present application.
FIG. 17 is a schematic exploded view of the battery cell core unit according to the present application.
FIG. 18 is a schematic diagram for the assembly of the battery cell core unit with an upper housing and a lower housing according to the present application.
FIG. 19 is a front view of a cell according to the present application.
FIG. 20 is a side view of a cell according to the present application.

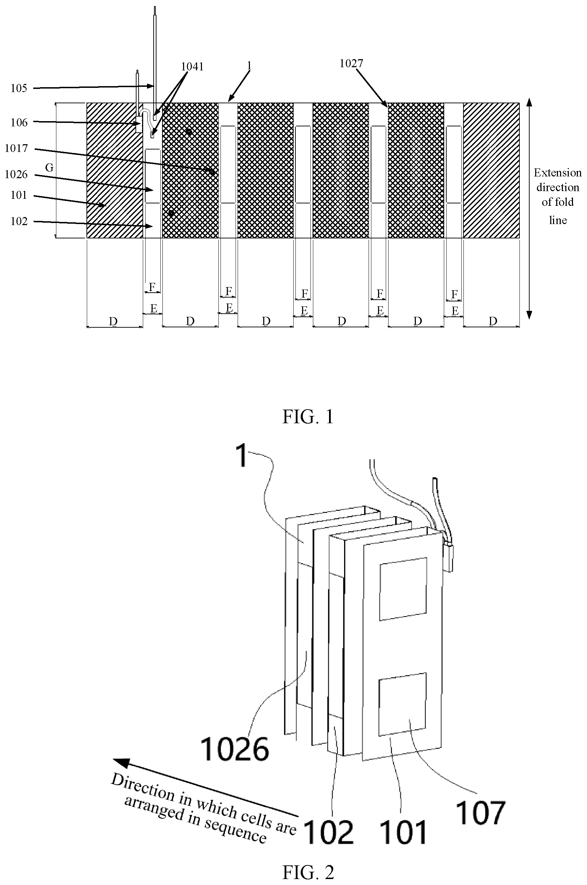

In FIGS. 1 to 20:
1. Heating film; 2. Battery cell module; 3. Tab welding plate; 4. Control circuit board; 5. Tab isolation foam; 6. Insulation sheet; 7. Positive wire; 8. Negative wire; 9. Signal cable; 10. Connector terminal; 11. Control circuit board screw; 12. Connector terminal screw; 13. Front auxiliary foam; 14. Rear auxiliary foam; 15. Left auxiliary foam; 16. Right auxiliary foam; 17. Bottom auxiliary foam; 18. Upper housing; 19. Lower housing; 20. Semi-finished battery core unit; 21. Battery core unit;
101. Heating zone; 102. Fold connection zone; 103. Protective layer; 104. Heating core; 105. Electrical connector; 106. Temperature switch; 107. Adhesive member;
201. Cell; 202. Battery cell isolation foam;
301. Guide hole;
1011. First heating zone; 1012. Second heating zone; 1013. Third heating zone; 1014. Fourth heating zone; 1015. Fifth heating zone; 1016. Sixth heating zone; 1017. Positioning hole;
1021. First fold connection zone; 1022. Second fold connection zone; 1023. Third fold connection zone; 1024. Fourth fold connection zone; 1025. Fifth fold connection zone; 1026. Through hole; 1027. Fold line;
1041. Electrical connection end;
2011. First cell; 2012. Second cell; 2013. Third cell; 2014. Fourth cell; 2015. Fifth cell; 2016. Sixth cell; 2017. Seventh cell; 2018. Eighth cell; 2019. Ninth cell; 20110. Tenth cell; 20111. Eleventh cell; 20112. Twelfth cell.

### DETAILED DESCRIPTION OF THE EMBODIMENTS

The present application provides a heating film, and further provides a battery pack including the heating film.

Technical solutions in embodiments of the present application are clearly and completely described below with reference to the drawings in the embodiments of the present application. Apparently, the embodiments described are merely part rather than all of the embodiments of the present application. All other embodiments obtained by a person of ordinary skill in the art based on the embodiments of the present application without creative efforts shall fall within the scope of protection of the present application.

As shown in FIGS. 1 to 20, a heating film is used for heating a plurality of cells 201 arranged in sequence. The heating film 1 includes a plurality of heating zones 101 arranged at intervals and a fold connection zone 102 located between two adjacent heating zones 101. An edge of the fold connection zone 102 adjacent to the heating zone 101 is a fold line 1027, and the heating film 1 is foldable along the fold lines 1027. Referring to FIG. 2, the plurality of heating zones 101 in the folded heating film 1 are arranged in sequence along an arrangement direction of the cells 201, and the fold connection zone 102 is parallel to the arrangement direction of the cells 201. Through holes 1026 are formed in the heating film, and each of the fold lines is located at an edge of the through hole 1026 or extends through the through hole 1026.

It should be noted that each of the fold lines 1027 being located at an edge of the through hole 1026 or passing through the through hole 1026 means that, when the heating film is in an unfolded state, the through hole 1026 is exactly formed in the fold connection zone 102, and a width of the through hole 1026 is exactly equal to a width of the fold connection zone 102 along a direction in which the plurality of heating zones 101 are arranged at intervals; or when the heating film is in an unfolded state, a region in which the through hole 1026 is formed extends beyond the fold connection zone 102, and two edges of the through hole 1026 are exactly located within the two heating zones 101 adjacent to the fold connection zone 102, respectively, that is, the width of the through hole 1026 is greater than the width of the fold connection zone 102 along the direction in which the plurality of heating zones 101 are arranged at intervals.

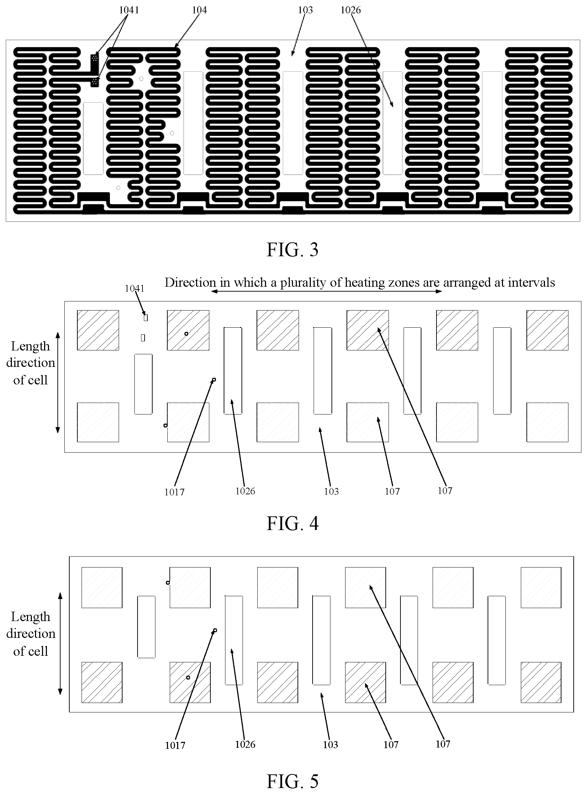

It should be further noted that, when the heating film is in the unfolded state, the direction in which the plurality of heating zones 101 are arranged at intervals is the direction shown by the arrows in FIG. 4.

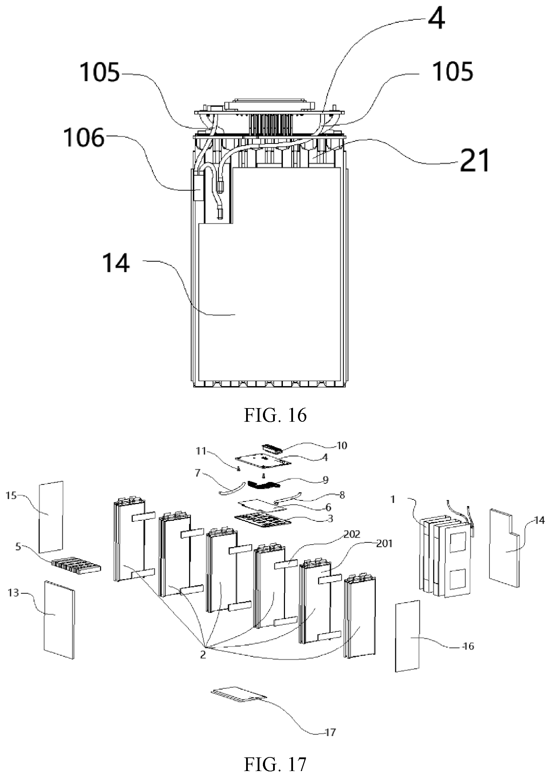

In the folded heating film 1, the fold connection zone 102 and two heating zones 101 adjacent thereto enclose a folding space; and the heating film 1 forms a plurality of folding spaces arranged along an S-curve, specifically the heating film 1 as shown in FIGS. 2 and 17. The plurality of cells 201 are disposed in the plurality of folding spaces.

In order to ensure that each cell 201 can directly fit and contact the heating zone 101, it is preferred that one cell 201 or two cells 201 are arranged within each folding space. Further, in the folded heating film 1, cells 201 are also arranged on sides, away from the folding space, of the heating zones 101 located at both end portions.

The heating film 1 is functioned such that when the battery pack is at a low temperature, the heating film 1 can generate uniform heat and transfer it to the cells 201, such that the battery cell module 2 is maintained at a suitable temperature to enhance the reactivity of internal chemical substances of the battery pack.

A through hole 1026 is formed at each fold connection zone 102 of the heating film. When the heating film 1 is sequentially folded along the S-curve along the fold lines 1027 of the fold connection zones 102, due to the presence of the through holes 1026 and the fact that each fold line 1027 is exactly located at an edge of a through hole 1026 or can pass through the through hole 1026, the material consumption of the heating film at the fold lines 1027 can be effectively reduced, and the size of the material folded along the fold lines 1027 is reduced, such that the stress of the heating film at the fold lines 1027 (i.e., bent corners of the heating film 1) is effectively reduced, thereby facilitating folding and assembly and achieving a continuous bending operation of the heating film 1; and arching of the heating zones 101 under the action of the stress can be avoided, thereby ensuring the fitting effect between the heating zones 101 and the surfaces of the cells 201 and effectively transferring heat to the cells 201. Moreover, the formed through holes 1026 reduce the weight of the heating film 1 itself, thereby ensuring the energy density of the manufactured battery pack.

In some embodiments of the present application, a plurality of through holes 1026 are provided along an extension direction of the fold line 1027.

It should be noted that the extension direction of the fold lines 1027 is a direction shown by the arrow in FIG. 1.

In each fold connection zone 102, only one through hole 1026 may be provided, which can effectively reduce the number of openings. Of course, a plurality of through holes 1026 may be provided, which can effectively reduce the opening size of the through holes 1026, thereby ensuring the accuracy and convenience of the manufacturing process.

Further, along the extension direction of the fold line 1027, a ratio of a total length of the through holes 1026 to a length of the fold line 1027 ranges from 0.5 to 0.9.

It should be noted that the length of the fold line 1027 is the length of the fold connection zone 102.

Limiting the ratio of the total length of the through hole 1026 to the length of the fold line 1027 within the above range can ensure that the through hole 1026 does not run through the entire heating film while effectively reducing the stress on the heating film at the fold lines 1027, thereby ensuring the reliability of the overall connection of the heating film.

Preferably, one through hole 1026 may be provided and located in a central region of the fold connection zone 102.

This ensures the uniform force distribution on the fold lines 1027 on both sides of the fold connection zone 102 and thus ensures the consistency and stability of the assembly of the heating film 1 and the cells 201.

Referring to FIG. 1, in some embodiments of the present application, corners of the through hole 1026 are chamfered.

Further, the through hole 1026 is a rectangular through hole; and the corners of the through hole 1026 are rounded.

This avoids the disadvantage of stress concentration at the corners of the through hole 1026, and thus avoids the disadvantage of the corners of the through hole 1026 being easily torn when the heating film 1 is pulled by an external force.

Referring to FIGS. 1 and 3, in some embodiments of the present application, the heating film 1 includes a protective layer 103, a heating core 104, and an electrical connector 105. Two protective layers 103 are arranged in a stack. The heating core 104 is disposed between the two protective layers 103, and an electrical connection end 1041 of the heating core 104 is located in the fold connection zone 102. The electrical connector 105 is electrically connected to the electrical connection end 1041.

It should be noted that the protective layer 103 is generally made of a PI covering film (polyimide) or a PET covering film (high-temperature resistant polyester), which is a soft and flexible insulation substrate that wraps around the heating core 104 to achieve isolation and insulation protection.

For example, a clearance hole is formed in one of the protective layers 103 of the heating film 1, and the clearance hole is positioned opposite the electrical connection end 1041 to expose the electrical connection end 1041, so as to achieve convenient and quick electrical connection between the electrical connector 105 and the electrical connection end 1041.

The heating core 104 has two electrical connection ends 1041, namely, a positive electrical connection end and a negative electrical connection end. Correspondingly, two electrical connectors 105 are provided, namely, a positive electrical connector and a negative electrical connector. One of the protective layers 103 has a clearance hole which is at a position opposite the electrical connection end 1041, allowing the positive electrical connector to be electrically connected to the positive electrical connection end and the negative electrical connector to be electrically connected to the negative electrical connection end, so as to supply heating current to the heating core 104 via the positive electrical connector and the negative electrical connector.

The heating core 104 includes a plurality of heating portions that supply heat. The plurality of heating portions are arranged in a one-to-one correspondence with the plurality of heating zones 101. The fold connection zones 102 are regions that do not supply heat, but traces need to be arranged within the fold connection zones 102 to connect the plurality of heating portions in series.

Since the electrical connection end 1041 of the heating core 104 is formed in the fold connection zone 102, the electrical connection module of the folded heating film 1 can be integrated at the end portion of the heating film 1 and located outside the folding space. This not only facilitates connection with an external power source, but also does not interfere with the folding of the heating film 1 and does not affect the close fit between the heating zone 101 and the surface of the cells 201. Moreover, this will not occupy the area of the heating portion of the heating core 104, ensuring the comprehensive and uniform heating effect of the heating zone 101 on the cells 201.

Preferably, starting from the starting end of the folded heating film 1, the first of the fold connection zones 102 of the heating film is a first fold connection zone 1021; and both electrical connection ends 1041 of the heating core 104 are formed in the first fold connection zone 1021.

Referring to FIG. 1, in some embodiments of the present application, a temperature switch 106 is connected to the electrical connector 105. When a temperature is higher than a first set value, the temperature switch 106 is opened, and the heating film 1 stops working and does not heat up; and when a temperature is lower than a second set value, the temperature switch 106 is closed, and the heating film 1 starts to work and heat.

It should be noted that the temperature switch is composed of a thermally conductive plastic housing, a bimetallic element soldered with silver alloy contacts, a conductive bracket, an insulation mounting base, a stationary contact plate, a heat-resistant wire, and other elements. During flowing of current through the bimetallic element with impedance, when abnormal operation occurs, as the current increases or the ambient temperature rises to the first set value, the bimetallic element quickly activates, and the silver alloy contacts open to disconnect from the stationary contact plate, so that the charging circuit of the heating film 1 is disconnected. When the ambient temperature cools down to the second set value, the silver alloy contacts of the bimetallic element automatically close to connect with the stationary contact plate, so that the charging circuit of the heating film 1 is connected to restore the normal operating state, achieving a thermal protection for the battery pack. Further, the first set value and the second set value of temperature of the heating film 1 are both within a safe operating temperature range of the battery pack.

The provision of the temperature switch 106 enables the temperature of the battery pack during charging and discharging to be controlled within the suitable operating range of the battery pack, that is, between the second set value and the first set value, thereby improving the electrical performance, safety, and lifespan of the battery pack.

Further, the first set value is greater than the second set value; the first set value does not exceed 60°C; and the second set value is not lower than 15°C.

Preferably, the first set value is 60°C; and the second set value is 15°C. During a charging and discharging process of the battery pack, the heating temperature of the heating film 1 may be maintained within a working range from 15°C to 60°C.

Referring to FIG. 3, in some embodiments of the present application, the heating core 104 is a heating resistance wire.

It should be noted that only one heating resistance wire is used in the heating film 1 in the present application. Both a start end and a finish end of the heating resistance wire are electrical connection ends 1041.

The start end of the heating resistance wire is fixed in the first fold connection zone; then the heating resistance wire is folded and arranged in different heating portions in sequence, and the finish end of the heating resistance wire can ultimately return to and be fixed in the first fold connection zone; and the fixing position of the start end of the heating resistance wire is opposite the fixing position of the finish end of the heating resistance wire.

The heating resistance wire is generally made of SUS304 (stainless steel), copper, or an alloy material. On the basis of the electrothermal efficiency formula P = RI^2 and the formula of the law of resistance R = ρL/S, where ρ is a resistivity of a material used to make the heating resistance wire, L is a length of the heating resistance wire, and S is a cross-sectional area of the heating resistance wire, when it is desired to increase the heating temperature of the heating zone 101, the cross-sectional area of the heating resistance wire can be reduced. Therefore, the heating temperature of the heating zone 101 can be controlled by means of adjusting the cross-sectional area of the heating resistance wire, so that the heating temperature of the heating film 1 on the battery cell module 2 can be evenly distributed.

Referring to FIG. 1, in some embodiments, the electrical connector 105 is a connecting wire.

It should be noted that the connecting wire is generally made of an extra-soft silicone wire. It is soft and easy to assemble and weld with the electrical connection end 1041 of the heating core 104.

Further, the electrical connector 105 may also be replaced with an FPC connecting board. The FPC connecting board is electrically connected to the control circuit board 4 to connect to an external circuit via the control circuit board 4, so as to supply heating current to the heating core 104.

Referring to FIG. 1, in some embodiments, an insulation protective layer is provided at a connection between the electrical connector 105 and the electrical connection end 1041. A first insulation protective layer is provided at a welding point between the positive connecting wire and the start end of the heating resistance wire; and a second insulation protective layer is provided at a welding point between the negative connecting wire and the finish end of the heating resistance wire.

This can prevent short circuit between two adjacent electrical connectors 105, that is, between the positive connecting wire and the negative connecting wire.

Further, insulation adhesive is applied to an electrical connection point between the electrical connector 105 and the electrical connection end 1041; and the insulation adhesive cures to form an insulation protective layer.

Referring to FIG. 1 and FIGS. 3 to 5, in some embodiments of the present application, a positioning hole 1017 is formed in the heating film 1, so that when the heating film 1 is assembled with the cells 201, the positioning hole 1017 is positioned with a positioning point of an assembly fixture.

It should be noted that the positioning hole 1017 runs through the heating film 1; the positioning hole 1017 is formed in the heating zone 101; and a plurality of positioning holes 1017 are provided and form three positioning portions arranged in a triangular pattern.

Preferably, starting from a starting end of the folded heating film 1, the first of the heating zones of the heating film 1 is a first heating zone, and the second of the heating zones 101 is a second heating zone. The positioning hole 1017 is formed in the second heating zone. The heating resistance wire is folded and arranged in the second heating zone, such that the positioning hole 1017 is avoided.

A positioning protrusion that can be adapted to the positioning hole 1017 is formed at the positioning point of the assembly fixture. During assembly, one cell 201 is first placed on the assembly fixture; and then the first heating zone of the heating film 1 is placed on a surface of the cell 201, and the positioning hole 1017 of the second heating zone of the heating film 1 is calibrated and aligned with the positioning point of the assembly fixture to achieve accurate placement of the heating film 1, ensuring the assembly accuracy between the heating film 1 and the cell 201.

Referring to FIGS. 4 and 5, in some embodiments of the present application, adhesive members 107 are provided on both a front side and a back side of the heating zone 101.

It should be noted that the adhesive member 107 is a thermally conductive double-sided adhesive tape bonded to the heating film 1.

The provision of thermally conductive double-sided adhesive tape can ensure the close fit of assembly and connection between the heating film 1 and the cells 201 so that the heat generated by the heating film 1 can be efficiently conducted to the cells 201, and can also make the connection of the entire battery cell module 2 more secure to strengthen the overall structure.

Further, the thermally conductive double-sided adhesive tape has a thickness ranging from 0.03 mm to 0.07 mm. Preferably, the thermally conductive double-sided adhesive tape has a thickness of 0.05 mm, or has a thickness dimension as small as possible, so that the assembled battery pack finished product is small in size and better meets the requirements of application scenarios.

Further, in addition to the thermally conductive double-sided adhesive tape, hot melt adhesive may also be used as the adhesive member 107.

Referring to FIGS. 4 and 5, further, the heating zone 101 includes a first end and a second end along the length direction of the cell 201. Adhesive members 107 are bonded respectively near the first end and near the second end of the heating zone 101, with a spacing therebetween.

This, on the one hand, can reduce the required material consumption area and thus reduce the cost; and on the other hand, can make the heating film 1 contact with the battery cell in close fit as much as possible, providing the heat conduction efficiency. After a charge-discharge cycle of the cell 201, the cell 201 expands and becomes larger, and usually the cell 201 bulges from the middle. If the adhesive member 107 is bonded at the middle position of the cell 201, the expansion of the battery pack may be affected, causing a safety risk. Therefore, the adhesive member 107 is bonded only to the two end portions of the cell 201 that are spaced apart, and its size is minimized while ensuring a tight connection.

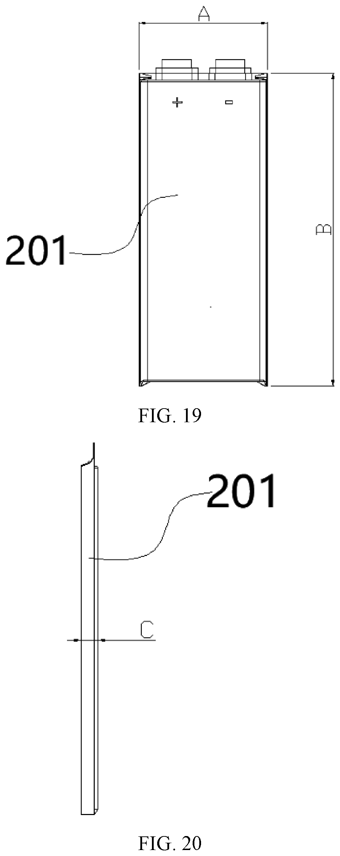

Referring to FIGS. 19 and 20, in some embodiments of the present application, a width dimension of the cell 201 is denoted by A, a length dimension of the cell 201 is denoted by B, and a thickness dimension of the cell 201 is denoted by C. Referring to FIG. 1, a width dimension of the heating zone 101 is denoted by D; a width dimension of the fold connection zone 102 is denoted by E; the sum of the thickness dimensions of all cells 201 that can be accommodated within the folding space is denoted by F; and a length dimension of the heating film 1, a length dimension of the heating zone 101, and a length dimension of the fold connection zone 102 are equal and all denoted by G.

The length dimension G of the heating zone 101 is less than or equal to the length dimension B of the cell 201; and the width dimension D of the heating zone 101 is less than or equal to the width dimension A of the cell 201.

Further, the length dimension G of the fold connection zone 102 is less than or equal to the length dimension B of the cell 201; and the width dimension E of the fold connection zone 102 is greater than or equal to the sum F of the thickness dimensions of the cells 201 that can be accommodated within the folding space.

It should be noted that, when a plurality of cells 201 are provided within the folding space, and battery cell isolation foam 202 needs to be provided between adjacent cells 201, the dimension F refers to the sum of the thickness dimensions of all cells 201 that can be accommodated within the folding space and all battery cell isolation foam 202. Further, a width dimension of the through hole 1026 is denoted by F.

This can ensure that the heating film 1 is sized to not extend beyond the edge of the cell 201, ensuring the energy density of the battery pack. Moreover, this can ensure that the number of the folding spaces formed by the folded heating film 1 exactly matches with the number of cells 201 that need to be accommodated, thereby ensuring the assembly fitness between the heating film 1 and the cells 201.

Further, the heating film 1 has a thickness dimension ranging from 0.13 mm to 0.5 mm.

Since the heating power is negatively correlated with the cross-sectional area of the heating resistance wire, a heating resistance wire of an appropriate size is selected according to a required heating temperature, and a heating film 1 of an appropriate thickness dimension is selected accordingly.

Referring to FIG. 1, in some embodiments of the present application, the heating zones 101 in the heating film 1 are different in heat generation power. Since the battery cell module 2 is composed of a plurality of cells 201 disposed in a stack, the cells 201 in the middle receive more heat than the cells 201 on both sides. To ensure uniform heat distribution, it is designed that the heat generation power is not uniform in different heating zones 101 of the heating film 1. In general, a heating power of the heating zone 101 located at both end portions of the heating film 1 is greater than a heating power of the heating zone 101 located in a middle region of the heating film.

It should be noted that the present application uses a heating film 1, which includes six heating zones 101 spaced apart, as an example for description. The sum of heating power of the two heating zones 101 at both ends of the heating film 1 is I; and the sum of heating power of the four heating zones 101 in the middle region of the heating film is J. Therefore, the heating power I/2 of the heating zone 101 on the edge side of the heating film 1 is larger, and the heating power J/4 of the heating zone 101 in the middle region of the heating film 1 is smaller.

The fold connection zone 102 does not need to heat the cell 201, but traces need to be arranged within this region to connect the plurality of adjacent heating zones 101 in series. The heat generation power of the traces arranged in each fold connection zone 102 is K. K is controlled to satisfy K = I/2 - J/4. Generally, K ≤ 2W. This can maximally maintain uniform overall heating.

A heating film 1 having six heating zones 101 is provided. According to the assembly sequence, the heating film 1 sequentially includes a first heating zone 1011, a first fold connection zone 1021, a second heating zone 1012, a second fold connection zone 1022, a third heating zone 1013, a third fold connection zone 1023, a fourth heating zone 1014, a fourth fold connection zone 1024, a fifth heating zone 1015, a fifth fold connection zone 1025, and a sixth heating zone 1016. The heating film 1 is assembled with twelve cells 201. According to the assembly sequence, the twelve cells 201 are a first cell 2011, a second cell 2012, a third cell 2013, a fourth cell 2014, a fifth cell 2015, a sixth cell 2016, a seventh cell 2017, an eighth cell 2018, a ninth cell 2019, a tenth cell 20110, an eleventh cell 20111, and a twelfth cell 20112.

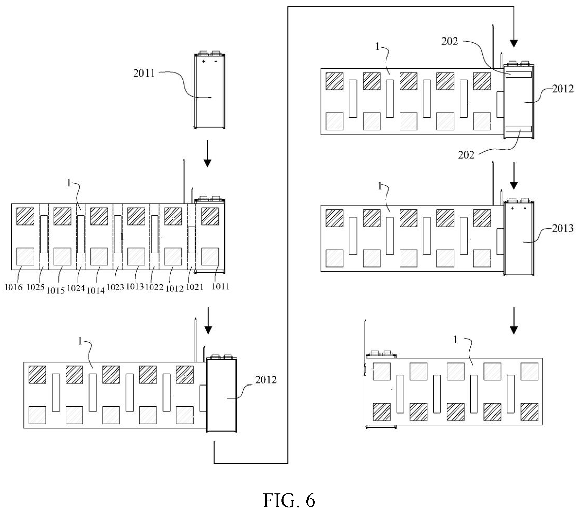

Referring to FIGS. 6 to 9, the heating film 1 is assembled with the twelve cells 201 in steps as follows.

At step 1, the first cell 2011 is positioned and placed on an assembly fixture.

At step 2, a positioning hole 1017 in the heating film 1 is aligned with a positioning point in the assembly fixture, and a back side of the first heating zone 1011 is bonded to the first cell 2011.

At step 3, the second cell 2012 is stacked on the front side of the first heating zone 1011.

At step 4, battery cell isolation foam 202 is attached to a surface of the second cell 2012.

At step 5, the third cell 2013 is stacked.

At step 6, two fold lines 1027 of the first fold connection zone 1021 are folded in sequence so that the heating film 1 is folded back onto a surface of the third cell 2013, at which time a front side of the second heating zone 1012 is bonded to the third cell 2013 (steps 1 to 6, as shown in FIG. 6).

At step 7, the fourth cell 2014 is stacked on a back side of the second heating zone 1012.

At step 8, battery cell isolation foam 202 is attached to a surface of the fourth cell 2014.

At step 9, the fifth cell 2015 is stacked.

At step 10, two fold lines 1027 of the second fold connection zone 1022 are folded in sequence so that the heating film 1 is folded back onto a surface of the fifth cell 2015, at which time a back side of the third heating zone 1013 is bonded to the fifth cell 2015.

At step 11, the sixth cell 2016 is stacked on a front side of the third heating zone 1013.

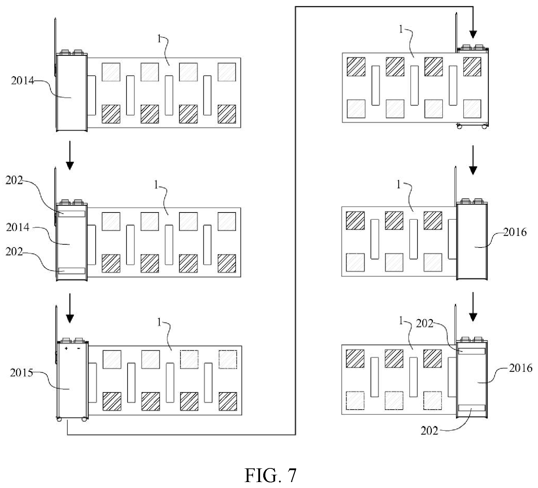

At step 12, battery cell isolation foam 202 is attached to a surface of the sixth cell 2016 (steps 7 to 12, as shown in FIG. 7).

At step 13, the seventh cell 2017 is stacked.

At step 14, two fold lines of the third fold connection zone 1023 are folded in sequence so that the heating film 1 is folded back onto a surface of the seventh cell 2017, at which time a front side of the fourth heating zone 1014 is bonded to the seventh cell 2017.

At step 15, the eighth cell 2018 is stacked on a back side of the fourth heating zone 1014.

At step 16, battery cell isolation foam 202 is attached to a surface of the eighth cell 2018.

At step 17, the ninth cell 2019 is stacked.

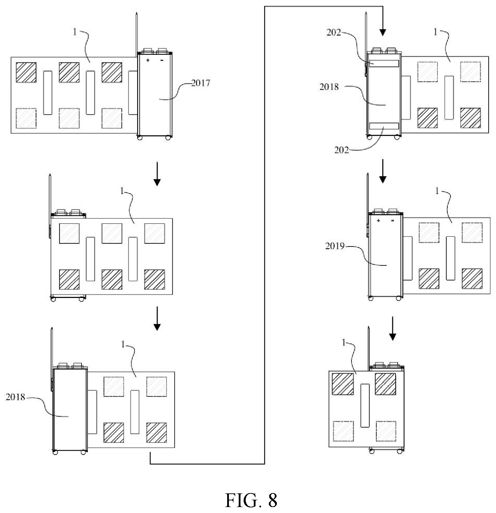

At step 18, two fold lines 1027 of the fourth fold connection zone 1024 are folded in sequence so that the heating film 1 is folded back onto a surface of the ninth cell 2019, at which time a back side of the fifth heating zone 1015 is bonded to the ninth cell 2019 (steps 13 to 18, as shown in FIG. 8).

At step 19, the tenth cell 20110 is stacked on a front side of the fifth heating zone 1015.

At step 20, battery cell isolation foam 202 is attached to a surface of the tenth cell 20110.

At step 21, the eleventh cell 20111 is stacked.

At step 22, two fold lines 1027 of the fifth fold connection zone 1025 are folded in sequence so that the heating film 1 is folded back onto a surface of the eleventh cell 20111, at which time a front side of the sixth heating zone 1016 is bonded to the eleventh cell 20111.

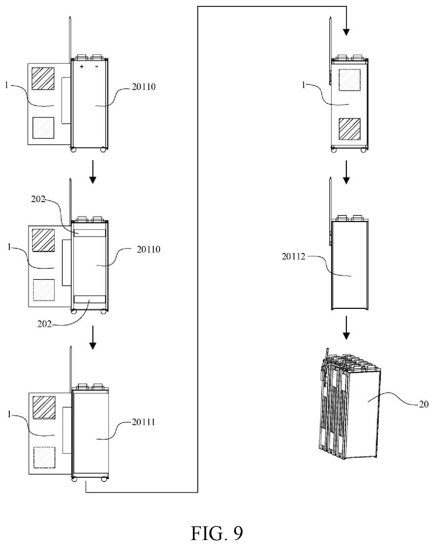

At step 23, the twelfth cell 20112 is stacked on a back side of the sixth heating zone 1016, thus completing the assembly of the heating film 1 with the twelve cells 201 (steps 19 to 23, as shown in FIG. 9).

Through the above assembly steps, a semi-finished battery core unit 20 of an overall structure is obtained by the battery cell module 2 fitting with the folded heating film 1.

The thickness dimension of the battery cell isolation foam 202 is denoted by M, the thickness dimension of the cell 201 is denoted by C, and M and C satisfy: M * 70% = C * 2 + C * 10% * 2.

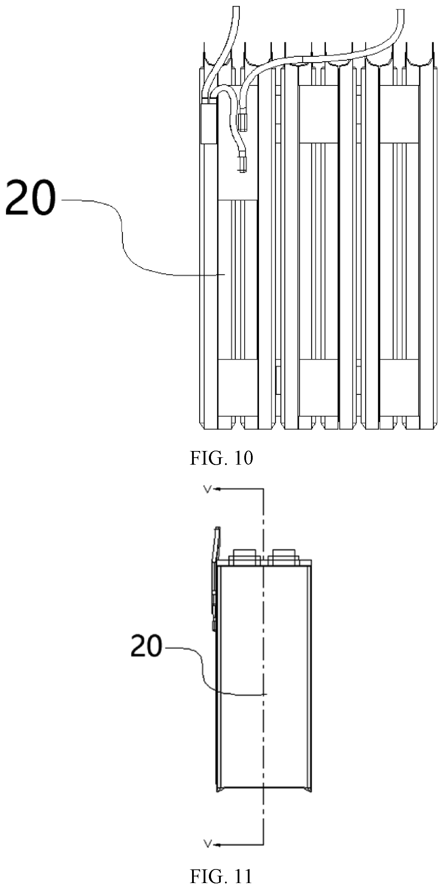

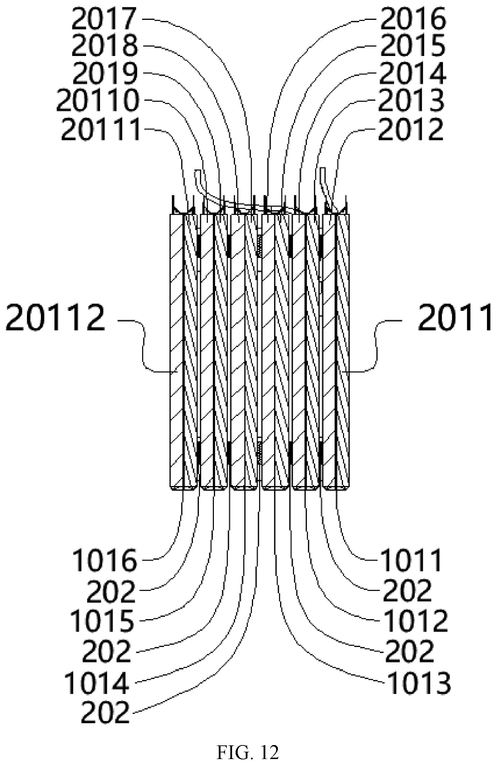

Referring to FIGS. 10 to 12, FIG. 12 shows a cross-sectional view of the heating film 1 after being assembled with a plurality of cells 201. As shown in FIG. 12, one heating zone 101 is sandwiched between every two cells 201, such that the heating film 1 can effectively supply uniform heat to each cell 201.

In summary, the present application further provides a battery pack including a battery cell module 2 and a heating film 1 described above. The battery cell module 2 includes a plurality of cells 201 arranged in sequence. The heating film 1 forms a plurality of folding spaces arranged in sequence along an arrangement direction of the cells 201. The plurality of cells 201 are disposed in the plurality of folding spaces.

Since the battery pack has the heating film 1 described above, the beneficial effects of the battery pack owing to the heating film 1 are described as above and will not be repeated herein.

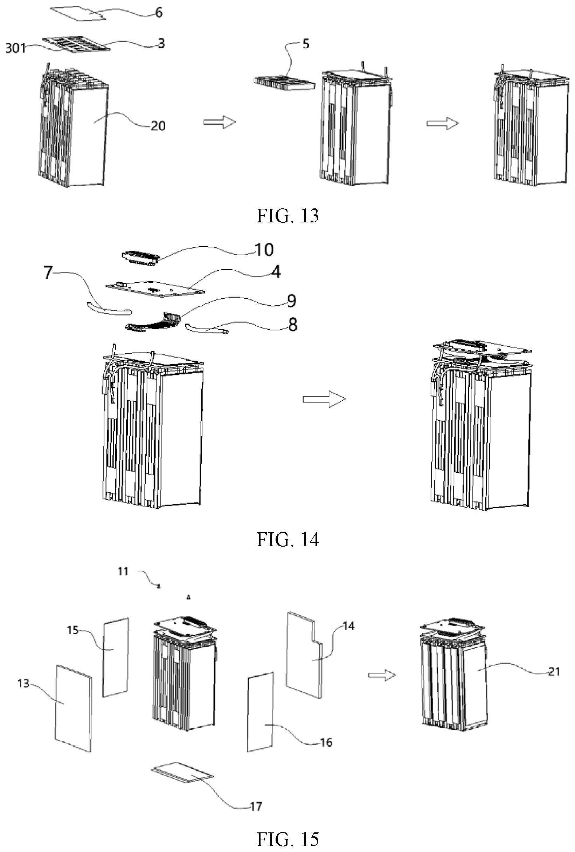

Referring to FIGS. 13 and 17, in some embodiments of the present application, the battery pack includes a tab welding plate 3. The tab welding plate 3 is located above the battery cell module 2. A guide hole 301 is formed in the tab welding plate 3. The electrical connector 105 of the heating film 1 passes through the guide hole 301.

It should be noted that the tab welding plate 3 has tab lead-out holes arranged at intervals. A welding land is formed between adjacent tab lead-out holes. A nickel brick is provided on the welding land.

After the heating film 1 is assembled with the cells 201 to obtain the semi-finished battery core unit 20, the tab welding plate 3 is disposed above the semi-finished battery core unit 20 (i.e., above the battery cell module 2). Tabs in the battery cell module 2 respectively pass through the tab lead-out holes of the tab welding plate 3; and then the tabs are flattened and are aligned with the nickel bricks on the welding land of the tab welding plate 3, and the overlapping tabs are connected by means of laser or resistance welding.

The electrical connector 105 on the heating film 1 passes through the guide hole 301, so as to fix the outward extension of the electrical connector 105.

Referring to FIGS. 13 and 17, further, an insulation sheet 6 is attached to the tab welding plate 3. The insulation sheet 6 is provided to prevent the risk of short circuit caused by the contact between the tab welding point and other objects.

Tab isolation foam 5 is provided. The tab isolation foam 5 is inserted into gaps between adjacent tabs in the plurality of cells 201. The tab isolation foam 5 is located at the bottom of the tab welding plate 3. By providing the tab isolation foam 5, on the one hand, the tabs can be isolated to prevent the risk of short circuit caused by the contact between the tabs due to external vibration or other reasons; and on the other hand, the tab isolation foam 5 can support the tab welding plate 3, which prevents the risk of short circuit caused by the contact between the tab welding plate 3 and the cells 201, and also enhances the overall fixing effect.

Referring to FIGS. 14 and 17, in some embodiments of the present application, the battery pack includes a control circuit board 4. The electrical connector 105 of the heating film 1 is electrically connected to the control circuit board 4.

It should be noted that the tab welding plate 3 is welded and connected to the control circuit board 4 via a signal cable 9, which serves to collect and feedback operating condition information of the battery cell module 2.

The electrical connector 105 is electrically connected to the control circuit board 4, which avoids the need for complex and lengthy connection lines on the heating film 1 to connect to an external circuit. Through the control circuit board 4, an electrical conduction between the electrical connector 105 and the external circuit can be established to supply power to the heating film 1.

Further, a positive wire 7 and negative wire 8 are welded to the tab welding plate 3. The positive wire 7 is welded to a positive welding position of the tab welding plate 3, and the negative wire 8 is welded to a negative welding position of the tab welding plate 3. The purpose is to enable normal charge and discharge of the battery cell module 2.

Referring to FIG. 14, a connector terminal 10 is welded onto the control circuit board 4 to serve as a port for external connection.

Referring to FIGS. 15 and 17, protective assemblies are provided on the outer surface of the battery cell module 2, and the battery core unit 21 is finally obtained. The protective assembly is an auxiliary foam assembly attached to the outer surface of the battery cell module 2. The auxiliary foam assembly includes a front auxiliary foam 13, a rear auxiliary foam 14, a left auxiliary foam 15, a right auxiliary foam 16, and a bottom auxiliary foam 17. The provision of the protective assembly can prevent the battery core unit 21 from being punctured or scratched by the lower housing 19 when mounted into the lower housing 19, and also achieves a buffering and shock absorption effect and can thus prevent the risk of the battery cell module 2 being punctured or scratched by the lower housing 19 when the battery pack is subjected to external vibration.

The above description is only an embodiment of the present application. The battery core unit 21 placed inside the battery pack according to the present application may have various changes and variations.

Referring to FIGS. 16 and 17, further, a notch is formed in an upper left corner of the rear auxiliary foam 14 for the placement of the temperature switch 106 above the heating film 1. The temperature switch 106 is located on a side portion of the battery cell module 2, and the rear auxiliary foam 14 has a thickness so that the temperature switch 106 can be protected from the compression by the lower housing 19.

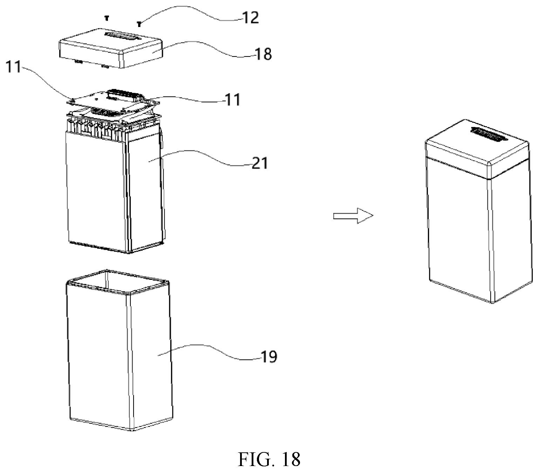

Referring to FIG. 18, control circuit board screws 11 are mounted onto the control circuit board 4; and the control circuit board 4 is fastened and connected to the upper housing 18 by means of the control circuit board screws 11, thus achieving a reliable connection between the control circuit board 4 and the upper housing 18. The connector terminal screws 12 are passed through the upper housing 18. The connector terminal 10 is fastened and connected to the upper housing 18 by means of the connector terminal screws 12, thus achieving a reliable fixation of the connector terminal 10 onto the upper housing 18. Finally, the upper housing 18 is placed on the lower housing 19 in a covering manner and connected by laser welding, ultrasonic welding, gluing, etc. Then, the assembly of the entire battery pack is completed.

The components and devices involved in the present application are merely illustrative examples and are not intended to require or imply that they must be connected, arranged, or configured in the manner shown in the accompanying drawings. As will be appreciated by those skilled in the art, these components and devices can be connected, arranged, and configured in any manner. Words such as "include", "comprise", "have", etc., are open-ended words that mean "include but is not limited to" and can be used interchangeably therewith. The words "or" and "and" as used herein refer to the words "and/or" and can be used interchangeably therewith unless the context clearly indicates otherwise. The word "such as" as used here refers to the phrase "such as, but not limited to" and can be used interchangeably therewith.

It should also be noted that in the device of the present application, the components can be decomposed and/or recombined. These decompositions and/or recombinations are to be regarded as equivalent solutions of the present application.

The above description of the disclosed aspects is provided to enable any person skilled in the art to make or use the present application. Various modifications to these aspects are readily apparent to a person skilled in the art, and the general principles defined herein may be applied to other aspects without departing from the scope of the present application. Therefore, the present application is not intended to be limited to the aspects shown herein, but to be in the broadest scope consistent with the principles and novel features disclosed herein.

The above description has been given for purposes of illustration and description. In addition, this description is not intended to limit the embodiments of the present application to the form disclosed herein. While various example aspects and embodiments have been discussed above, those skilled in the art will recognize certain variations, modifications, alterations, additions and sub-combinations thereof.

The above descriptions are merely preferred embodiments of the present application but not intended to limit the present application, and any modifications, equivalent replacements, etc. made within the spirit and principle of the present application shall fall within the scope of protection of the present application.

## Claims

1. A heating film, **characterized in that** the heating film is configured to heat a plurality of cells (201) arranged in sequence, and the heating film comprises a plurality of heating zones (101) arranged at intervals and a fold connection zone (102) located between two adjacent heating zones (101) of the plurality of heating zones (101);
wherein an edge of the fold connection zone (102) adjacent to each of the two adjacent heating zones (101) is a fold line, and the heating film is foldable along the fold line; and
a through hole (1026) is formed in the heating film, and the fold line is located at an edge of the through hole (1026) or extends through the through hole (1026).

2. The heating film according to claim 1, **characterized in that**
a plurality of through holes (1026) are provided along an extension direction of the fold line;
and/or
along the extension direction of the fold line, a ratio of a total length of the through hole (1026) to a length of the fold line ranges from 0.5 to 0.8.

3. The heating film according to claim 1 or 2, **characterized in that** corners of the through hole (1026) are chamfered.

4. The heating film according to any one of claims 1 to 3, **characterized in that** the heating film comprises:
two protective layers (103) arranged in a stack;
a heating core (104) disposed between the two protective layers (103), an electrical connection end (1041) of the heating core (104) being located in the fold connection zone (102); and
an electrical connector (105) electrically connected to the electrical connection end (1041).

5. The heating film according to claim 4, **characterized in that** a temperature switch (106) is connected to the electrical connector (105); and
when a temperature is higher than a first set value, the temperature switch (106) is turned off, and the heating film stops heating; and when the temperature is lower than a second set value, the temperature switch (106) is turned on, and the heating film heats.

6. The heating film according to claim 4 or 5, **characterized in that**
the heating core (104) is a heating resistance wire; and/or
the electrical connector (105) is a connecting wire; and/or
an insulation protective layer is provided at a connection between the electrical connector (105) and the electrical connection end (1041).

7. The heating film according to any one of claims 1 to 6, **characterized in that** a positioning hole (1017) is formed in the heating film, so that when the heating film is assembled with the plurality of cells (201), the positioning hole (1017) is positioned with a positioning point of an assembly fixture.

8. The heating film according to any one of claims 1 to 7, **characterized in that** adhesive members (107) are provided on both a front side and a back side of the heating zone (101).

9. The heating film according to claim 8, **characterized in that** the heating zone (101) comprises a first end and a second end that are positioned opposite each other along a length direction of each of the plurality of cells (201); and
the adhesive members (107) are respectively provided near the first end and near the second end of the heating zone (101), with a spacing therebetween.

10. The heating film according to any one of claims 1 to 9, **characterized in that**
a length dimension of the heating zone (101) is less than or equal to a length dimension of each of the plurality of cells (201), and a width dimension of the heating zone (101) is less than or equal to a width dimension of the cell (201);
and/or
a length dimension of the fold connection zone (102) is less than or equal to a length dimension of each of the plurality of cells (201), the fold connection zone (102) and the two adjacent heating zones (101) enclose a folding space in a folded heating film, and a width dimension of the fold connection zone (102) is greater than or equal to a sum of thickness dimensions of all cells (201) that are accommodated within the folding space;
and/or
a thickness dimension of the heating film ranges from 0.13 mm to 0.5 mm.

11. The heating film according to any one of claims 1 to 10, **characterized in that** a heating power of heating zones (101) at both ends of the heating film is greater than a heating power of a heating zone (101) in a middle region of the heating film.

12. The battery pack according to any one of claims 1 to 11, **characterized in that** the through hole (1026) is formed in the fold connection zone (102), and a width of the through hole (1026) is equal to a width of the fold connection zone (102) along a direction in which the plurality of heating zones (101) are arranged at intervals; or a region in which the through hole (1026) is formed extends beyond the fold connection zone (102), and two edges of the through hole (1026) are respectively located in the two adjacent heating zones (101).

13. A battery pack, **characterized by** comprising a battery cell module (2) and a heating film (1) according to any one of claims 1 to 12;
wherein the battery cell module (2) comprises a plurality of cells (201) arranged in sequence; and
the heating film (1) forms a plurality of folding spaces arranged in sequence along an arrangement direction of the plurality of cells (201), and the plurality of cells (201) are disposed in the plurality of folding spaces.

14. The battery pack according to claim 13, **characterized by** further comprising a tab welding plate (3) located above the battery cell module (2), a guide hole (301) being formed in the tab welding plate (3);
wherein the heating film (1) comprises an electrical connector (105) passing through the guide hole (301).

15. The battery pack according to claim 13 or 14, **characterized by** further comprising a control circuit board (4);
wherein an electrical connector (105) in the heating film (1) is electrically connected to the control circuit board (4).
